# EUROPEAN PATENT APPLICATION

(11) **EP 4 407 565 A1**
(43) Date of publication of application: **31.07.2024**
(21) Application number: 23153922.2
(22) Date of filing: 30.01.2023
(51) Int. Cl.: G06V 10/143, G06V 20/56, G08G 1/017

(54) **A SYSTEM AND A METHOD FOR IDENTIFYING AND VERIFYING THAT A VEHICLE IS GENUINE**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: LINDBERG NILSSON, Erik, 417 47 GÖTEBORG (SE); GARDTMAN, Angelika, 412 49 GÖTEBORG (SE)
(74) Representative: Zacco Sweden AB

(57) **Abstract**

The disclosure relates to a system (100) for identifying and verifying that a vehicle (1) is genuine, the system (100) comprises a lighting device (40a,40b) arranged at the vehicle (1) configured emit light, an electronic device (10) with a camera configured to capture at least any of an image and a video of the vehicle (1), a processing circuitry (102a,102b,102c) operatively connected to the lighting device (40a,40b) and the electronic device (10) configured to initiate identity emitting light by the lighting device (40a,40b), capture at least any of an image and a video of the vehicle (1) by the electronic device (10), process the captured image and/or video to identify the identity emitting light to verify that the vehicle in the captured image and/or video is genuinely the vehicle (1) with the lighting device (40a,40b). The disclosure further relates to a method for identifying and verifying that a vehicle (1) is genuine and a computer program product (500).

## Description

### Technical field

The present disclosure relates to a system for identifying and verifying that a vehicle is genuine, a method for identifying and verifying that a vehicle is genuine and a computer program product.

### Background art

It has become more and more popular to not own your own vehicle but instead share vehicles with other users. Examples of sharing vehicles are e.g. renting vehicles, leasing or subscribing to a vehicle, or sharing vehicles among users in a vehicle pool etc. A vehicle owner can also rent or lend the vehicle to another user.

When sharing vehicles it can sometimes be required to e.g. verify that the vehicle that a user has used has not been damaged when the user used the vehicle. The user of a shared vehicle can be asked to take a picture of the vehicle at a certain point in time e.g. when the user starts to use the vehicle, and/or when the user ends the usage of the vehicle. However, it can be the case that the vehicle in the picture is not the used vehicle but another vehicle. In particular, if the vehicle has been damaged, there may be a dishonest user that tries to avoid admitting that the user damaged the vehicle, e.g. crashed a part of the vehicle that will be seen in the picture, and instead takes a picture of a similar vehicle that is not damaged.

It is also common to ride in other's vehicles, e.g. use taxi services when a vehicle can be ordered and then a driver, or the vehicle itself in the case the vehicle is an autonomous vehicle, picks up the user at a certain location. When the user is waiting for the vehicle to show up at the certain location it can sometimes be difficult to know which vehicle that is intended for the user. Today, the user can look for e.g. a certain taxi service provider company, or e.g. try to look at the license plate of the vehicle to try to identify the vehicle. This is not always very easy when e.g. there are many different vehicles in the surroundings of the user, and when it is difficult to see the license plate etc.

### Summary

It is an object of the present disclosure to mitigate, alleviate or eliminate one or more of the above-identified deficiencies and disadvantages in the prior art and solve at least the above mentioned problem. The inventors have realized that there is a need and desire to ease up identifying and verifying that a vehicle is genuine.

According to a first aspect there is provided a system for identifying and verifying that a vehicle is genuine. The system comprises a lighting device arranged at the vehicle configured emit light, an electronic device with a camera configured to capture at least any of an image and a video of the vehicle, a processing circuitry operatively connected to the lighting device and the electronic device. The processing circuitry is configured to initiate identity emitting light by the lighting device, capture at least any of an image and a video of the vehicle by the electronic device, process the captured image and/or video to identify the identity emitting light to verify that the vehicle in the captured image and/or video is genuinely the vehicle with the lighting device.

An advantage with this first aspect is that the captured image and/or video must contain the identity emitting light, and this information is used to verify that the vehicle in the image and/or video is genuinely the vehicle with the lighting device.

According to some embodiments, the identity emitting light is at least any of a visible light and an infrared light.

An advantage with this embodiment is that the identity emitting light can both be visible to a user when the user is looking at the vehicle, but it can also be invisible to the user when the user is looking at the vehicle but instead visible by the electronic device that is configured to obtain infrared light.

According to some embodiments, the processing of the captured image and/or video to identify the identity emitting light the system comprises comparing the obtained identity emitting light with a predefined identity emitting light, and in a determination that the obtained identity emitting light corresponds to the predefined identity emitting light, determining that the vehicle in the captured image and/or video is genuinely the vehicle with the lighting device.

An advantage with this embodiment is that when the captured image contains the identity emitting light, which is predefined and therefore known to the system, the identity emitting light can be detected in the captured image and/or video, and used to verify that the vehicle in the image is genuinely the vehicle with the lighting device.

According to some embodiments, the processing circuitry is further configured to store the captured image and/or video together with the determination that the vehicle in the captured image and/or video is genuinely the vehicle with the lighting device.

An advantage with this embodiment is that this information can be retrieved at a later point in time to proof the presence of the vehicle in the in captured image and/or video.

According to some embodiments, the processing circuitry is further configured to receive a request indicative of initiation or termination of usage of the vehicle.

An advantage with this embodiment is that the system can determine when it is time to capture at least any of an image and a video of the vehicle by the electronic device.

According to some embodiments, the processing circuitry is further configured to generate an instruction message to the electronic device indicative of a request to capture at least any of an image and a video of the vehicle by the camera of the electronic device.

An advantage with this embodiment is that the system can prompt the electronic device to automatically take a picture of the vehicle, or to prompt a user to take a picture of the vehicle by the electronic device, a certain point in time.

According to a second aspect there is provided a method for identifying and verifying that a vehicle is genuine. The method comprising the step of initiating identity emitting light by a lighting device of the vehicle, the step of capturing at least any of an image and a video of the vehicle by an electronic device, and the step of processing the captured image and/or video to identify the identity emitting light to verify that the vehicle in the captured image and/or video is genuinely the vehicle with the lighting device.

An advantage with this second aspect is that the captured image and/or video must contain the identity emitting light, and this information is used to verify that the vehicle in the image and/or video is genuinely the vehicle with the lighting device.

According to some embodiments, the identity emitting light is emitted according to a predefined blinking sequence.

An advantage with this embodiment is that the predefined blinking sequence is unique and the predefined blinking sequence then has to be present in the captured image and/or video to verify that the vehicle is genuinely the vehicle with the lighting device emitting the identity emitting light according to the predefined blinking sequence.

According to some embodiments, the identity emitting light is emitted according to a predefined light intensity sequence.

An advantage with this embodiment is that the predefined light intensity sequence is unique and the predefined light intensity sequence then has to be present in the captured image and/or video to verify that the vehicle is genuinely the vehicle with the lighting device emitting the identity emitting light according to the predefined light intensity sequence.

According to some embodiments, the identity emitting light is emitted by at least a first predefined lighting device arranged at the vehicle.

An advantage with this embodiment is that the at least first predefined lighting device is uniquely arranged at the vehicle, and then the at least first predefined lighting device has to be present in the captured image and/or video to verify that the vehicle is genuinely the vehicle with the lighting device emitting the identity emitting light according to the the at least first predefined lighting device.

According to some embodiments the processing of the captured image and/or video to identify the identity emitting light the method comprises comparing the obtained identity emitting light with a predefined identity emitting light, and in a determination that the obtained identity emitting light corresponds to the predefined identity emitting light, determining that the vehicle in the captured image and/or video is genuinely the vehicle with the lighting device.

An advantage with this embodiment is that when the captured image contains the identity emitting light, which is predefined and therefore known to the system, the identity emitting light can be detected in the captured image and/or video, and used to verify that the vehicle in the image is genuinely the vehicle with the lighting device.

According to some embodiments, the method further comprises storing the captured image and/or video together with the determination that the vehicle in the captured image and/or video is genuinely the vehicle with the lighting device.

An advantage with this embodiment is that this information can be retrieved at a later point in time to proof the presence of the vehicle in the in captured image and/or video.

According to some embodiments, the method further comprises receiving a request indicative of initiation or termination of usage of the vehicle.

An advantage with this embodiment is that the system can determine when it is time to capture at least any of an image and a video of the vehicle by the electronic device.

According to some embodiments, the method further comprises generating an instruction message to the electronic device indicative of a request to capture at least any of an image and a video of the vehicle by the camera of the electronic device.

An advantage with this embodiment is that the system can prompt the electronic device to automatically take a picture of the vehicle, or to prompt a user to take a picture of the vehicle by the electronic device, a certain point in time.

According to a third aspect there is provided a computer program product comprising a non-transitory computer readable medium, having thereon a computer program comprising program instructions, the computer program being loadable into a processing circuitry and configured to cause execution of the method when the computer program is run by the processing circuitry.

Effects and features of the second and third aspects are to a large extent analogous to those described above in connection with the first aspect. Embodiments mentioned in relation to the first aspect are largely compatible with the second and third aspects.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a system for identifying and verifying that a vehicle is genuine according to an embodiment of the present disclosure.
Figure 2a shows a system for identifying and verifying that a vehicle is genuine according to an embodiment of the present disclosure, wherein the identity emitting light is visible light.
Figure 2b shows a system for identifying and verifying that a vehicle is genuine according to an embodiment of the present disclosure, wherein the identity emitting light is infrared light.
Figure 3 illustrates a flow chart of the method steps according to the second aspect of the disclosure.
Figure 4 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

It has become more and more popular to not own your own vehicle but instead share vehicles with other users. Examples of sharing vehicles are e.g. renting vehicles, leasing or subscribing to a vehicle, or sharing vehicles among users in a vehicle pool etc. A vehicle owner can also rent or lend the vehicle to another user.

When sharing vehicles it can sometimes be required to e.g. verify that the vehicle that a user has used has not been damaged when the user used the vehicle. This can also be a requirement from another party than the owner of the vehicle, e.g. an insurance company.

The user of a shared vehicle can be asked to take a picture of the vehicle at a certain point in time e.g. when the user starts to use the vehicle, and/or when the user ends the usage of the vehicle. It can also be the case that the user wants to proof that the vehicle has not been damaged at a certain point in time and therefore desires to take pictures of the vehicle that can be used as proof. However, it can be the case that the vehicle in the picture is not the used vehicle but another vehicle. In particular, if the vehicle has been damaged, there may be a dishonest user that tries to avoid admitting that the user damaged the vehicle, e.g. crashed a part of the vehicle that will be seen in the picture, and instead takes a picture of a similar vehicle that is not damaged. It is therefore of particular interest to further enhance the evidence of that the vehicle in the picture or video, actually is the genuine vehicle.

It is also common to ride in other's vehicles, e.g. use taxi services, such as Uber or local taxi companies, i.e. when a vehicle can be ordered and then a driver, or the vehicle itself in the case the vehicle is an autonomous vehicle, picks up the user at a certain location. The services has evolved but one classic problem remains. It is when a user is waiting for the vehicle to show up at the certain location it can sometimes be difficult for the user to know which vehicle that is intended for the user. Today, the user can look for e.g. a certain taxi service provider company, or e.g. try to look at the license plate of the vehicle to try to identify the vehicle. This is not always very easy when e.g. there are many different vehicles in the surroundings of the user, and when it is difficult to see the license plate etc.

It is an object of the present disclosure to mitigate, alleviate or eliminate one or more of the above-identified deficiencies and disadvantages in the prior art and solve at least the above mentioned problem. The inventors have realized that there is a need and desire to ease up identifying a vehicle and verifying that a vehicle in an image is genuine.

The first aspect of this disclosure shows a system 100 for identifying and verifying that a vehicle 1 is genuine.

The system 100 comprises a lighting device 40a,40b arranged at the vehicle 1 configured emit at least any of a visible light and an infrared light. According to some According to some embodiments the lighting device 40a,40b is configured to emit ultraviolet light.

According to some embodiments the lighting device 40a,40b is at least any of the already existing lighting devices of the vehicle 1.

According to some embodiments the lighting device 40a,40b is at least any of a front light, a headlight, a fog light, a rear light, a blinker light, a vehicle compartment light, a position light, a reverse light, a license plate light, an indicator light, a frunk light, a trunk light, a sign light, a mirror light, a surrounding light, a decoration light, a dashboard light, an instrument light, a searchlight, a vehicle brand light, an infrared light, an infrared light incorporated in at least any of the previously mentioned lights, an infrared light that is a separate lighting device 40a,40b that is not incorporated in any of the mentioned lighting devices 40a,40b.

The system 100 further comprises an electronic device 10 with a camera configured to capture at least any of an image and a video of the vehicle 1. According to some embodiments the electronic device 10 with a camera is at least any of a portable smart phone, a tablet device, a dedicated vehicle device, parking garage camera deice, a surveillance camera device, and a home security camera device. According to some embodiments the camera is configured to capture at least any of visible light and infrared light. According to some embodiments the camera is configured to capture ultraviolet light.

The system 100 further comprises a processing circuitry 102a,102b,102c operatively connected to the lighting device 40a,40b and the electronic device 10.

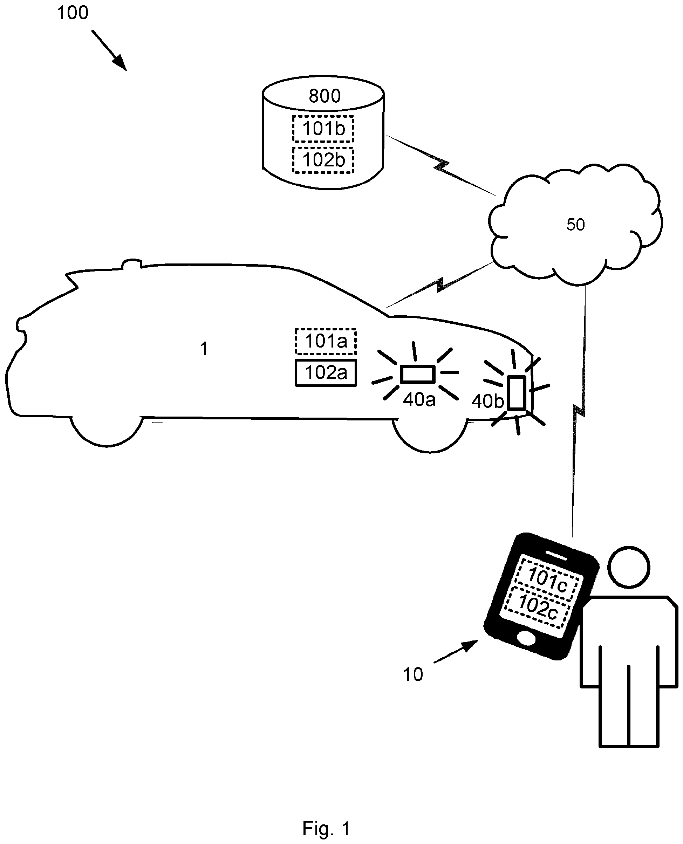

According to some embodiments the processing circuitry 102a is the processing circuitry of an on-board vehicle computer, as illustrated in Figure 1.

According to some embodiments the processing circuitry 102b is comprised in a remote electronic device 800 connectable to the system 100 via a wireless communication network 50, as illustrated in Figure 1.

According to some embodiments the processing circuitry 102c is comprised in an electronic device connectable to the system 100 via the wireless communication network 50, as illustrated in Figure 1.

According to some embodiments the system 100 further comprises a memory 101a,101b,101c configured to store data.

According to some embodiments the memory 101a is the memory of an on-board vehicle computer, as illustrated in Figure 1.

According to some embodiments the memory 101b is comprised in a remote electronic device 800 connectable to the system 100 via the wireless communication network 50, as illustrated in Figure 1.

According to some embodiments the memory 101c is comprised in the electronic device connectable to the system 100 via the wireless communication network 50, as illustrated in Figure 1.

According to some embodiments the wireless communication network 50, as illustrated in Figure 1, is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network.

According to some embodiments the wireless communication network 50 is a standardized wireless local area network such as a Wireless Local Area Network, WLAN, Bluetooth^{™}, ZigBee, Ultra-Wideband, Radio Frequency Identification, RFID, or similar network.

According to some embodiments wireless communication network 50 can also be a combination of both a local area network and a wide area network.

According to some embodiments the wireless communication network 50 is defined by common Internet Protocols.

The processing circuitry 102a,102b,102c is configured to initiate identity emitting light by the lighting device 40a,40b, capture at least any of an image and a video of the vehicle 1 by the electronic device 10, and process the captured image and/or video to identify the identity emitting light to verify that the vehicle in the captured image and/or video is genuinely the vehicle 1 with the lighting device 40a,40b.

An advantage with this first aspect is that the captured image and/or video must contain the identity emitting light, and this information is used to verify that the vehicle 1 in the image is genuinely the vehicle 1 with the lighting device 40a, 40b.

According to some embodiments the identity emitting light is at least any of a visible light and an infrared light.

An advantage with this embodiment is that the identity emitting light can both be visible to a user when the user is looking at the vehicle 1, but it can also be invisible to the user when the user is looking at the vehicle 1 but instead visible by the electronic device 10 that is configured to obtain infrared light.

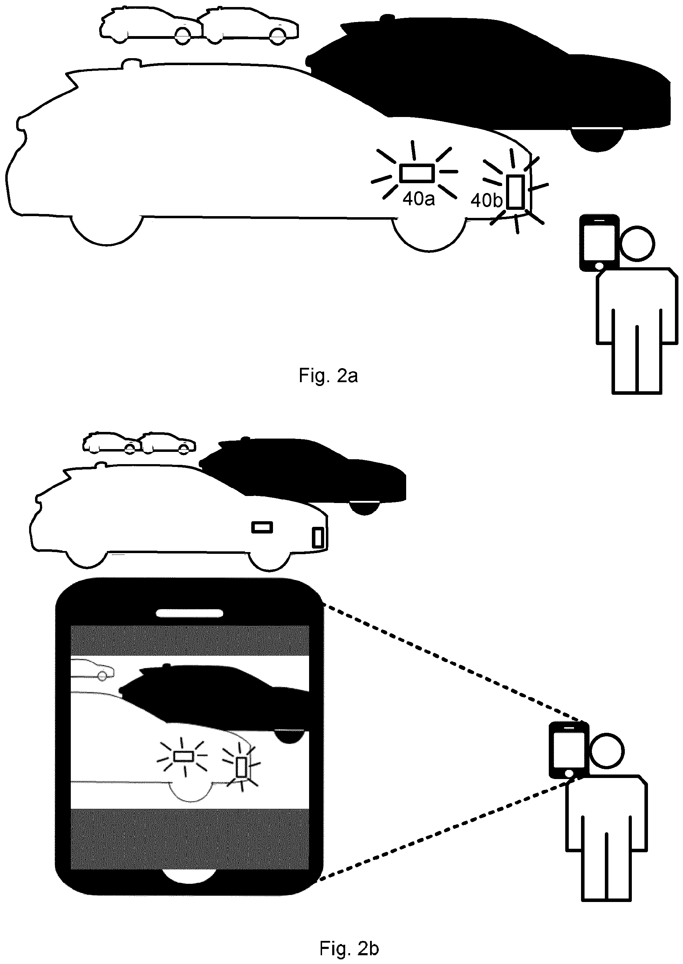

Figure 2a illustrates the system 100 when the identity emitting light is visible light. In the use case of a shared vehicle, the vehicle may for example be a rental vehicle, the user of the rental vehicle can e.g. be required to take pictures of the rental vehicle, or film the rental vehicle, after usage to proof that the rental vehicle has not been damaged. The identity emitting light then verifies that the rental vehicle in the captured image and/or video is genuinely the rental vehicle with the lighting device 40a,40b. When using visible light the user can see that the vehicle 1 is emitting light while taking pictures or filming the vehicle 1, as illustrated in Figure 2a.

Figure 2b illustrates the system 100 when the identity emitting light is infrared light. In the use case of riding in other's vehicles, e.g. when using a taxi service, the user that has ordered the taxi can use the camera viewfinder of the electronic device, e.g. a smartphone, to capture at least any of an image and a video of the approaching taxi and the smartphone can then inform the user via the user interface of the smartphone that the taxi in the captured image and/or video is genuinely the taxi with the lighting device 40a,40b emitting the identity emitting light. When using infrared light the user can see that the taxi is emitting light via the user interface of the smartphone that is configured to capture infrared light, as illustrated in Figure 2b. Then the taxi can approach the user without disturbing other vehicles since the infrared light is not visible to others.

According to some embodiments the processing of the captured image and/or video to identify the identity emitting light the system comprises comparing the obtained identity emitting light with a predefined identity emitting light, and in a determination that the obtained identity emitting light corresponds to the predefined identity emitting light, determining that the vehicle in the captured image and/or video is genuinely the vehicle 1 with the lighting device 40a,40b.

An advantage with this embodiment is that when the captured image contains the identity emitting light, which is predefined and therefore known to the system 100, the identity emitting light can be detected in the captured image and/or video, and used to verify that the vehicle 1 in the image is genuinely the vehicle 1 with the lighting device 40a, 40b.

According to some embodiments the processing circuitry 102a,102b,102c is further configured to store the captured image and/or video together with the determination that the vehicle in the captured image and/or video is genuinely the vehicle 1 with the lighting device 40a,40b.

An advantage with this embodiment is that this information can be retrieved at a later point in time to proof the presence of the vehicle 1 in the in captured image and/or video.

According to some embodiments the captured image and/or video together with the determination that the vehicle in the captured image and/or video is genuinely the vehicle 1 with the lighting device 40a,40b is stored in the memory 101a,101b,101c.

According to some embodiments the captured image and/or video together with the determination that the vehicle in the captured image and/or video is genuinely the vehicle 1 with the lighting device 40a,40b is time stamped and stored in the memory 101a,101b,101c.

According to some embodiments the processing circuitry 102a, 102b, 102c is further configured to determine that the vehicle in the captured image and/or video is genuinely the vehicle 1 with the lighting device 40a, 40b and output confirmation data. According to some embodiments the confirmation data is associated with the captured image and/or video and stored in the memory 101a,101b,101c.

According to some embodiments the confirmation data is used to output information indicative of that the vehicle in the captured image and/or video is genuinely the vehicle 1 with the lighting device 40a, 40b via a user interface. In the use case of riding in other's vehicles, e.g. when using a taxi service, the smartphone can just indicate "YES/NO" or signal "green/red" via the user interface of the application on the smartphone that the vehicle in the viewfinder is genuinely the taxi with the lighting device 40a, 40b.

According to some embodiments the processing circuitry 102a,102b,102c is further configured to receive a request indicative of initiation or termination of usage of the vehicle 1.

An advantage with this embodiment is that the system 100 can determine when it is time to capture at least any of an image and a video of the vehicle 1 by the electronic device 10.

According to some embodiments the processing circuitry 102a,102b,102c is further configured to generate an instruction message to the electronic device 10 indicative of a request to capture at least any of an image and a video of the vehicle 1 by the camera of the electronic device 10.

An advantage with this embodiment is that the system 100 can prompt the electronic device 10 to automatically take a picture of the vehicle 1, or to prompt a user to take a picture of the vehicle 1 by the electronic device 10, a certain point in time.

According to some embodiments the instruction message comprising information indicative of the identity emitting light to be used when the image and/or video of the vehicle 1 is captured. In an example the electronic device 10 can be informed of what identity emitting light that will be used at the time when the electronic device 10 is about to capture the image and/or video of the vehicle 1.

According to some embodiments the instruction message comprising information to the user how to capture the image and/or video of the vehicle 1. According to some embodiments the instruction message comprising information to be displayed to a user via a user interface of the electronic device 10. In an example the user is instructed to take picture showing at least part of the front and at least part of the left hand side of the vehicle 1.

According to some embodiments the instruction message comprising capture instruction data to the electronic device 10 indicative of when the electronic device 10 is to automatically capture the image and/or video of the vehicle 1. In an example, the user of the electronic device 10 is instructed to aim the camera to the vehicle 1 and walk around the vehicle 1, and the electronic device 10 automatically captures the image and/or video of the vehicle 1 as instructed by the capture instruction data in the instruction message.

According to some embodiments the processing circuitry 102a, 102b, 102c is further configured to generate an instruction message to the vehicle 1 indicative of a request to initiate identity emitting light by the lighting device 40a, 40b. According to some embodiments the instruction message is sent from the electronic device 10 to the vehicle 1.

In an example, an application installed on the electronic device 10 is started and when the electronic device 10 initiates capturing of at least any of an image and a video of the vehicle 1 by the camera of the electronic device, the instruction message to the vehicle 1 indicative of a request to initiate identity emitting light by the lighting device 40a, 40b, is sent from the electronic device 10 to the vehicle 1.

In a further example, the electronic device 10 is a camera device at a parking area, and when the vehicle 1 is detected by the camera device, an instruction message to the vehicle indicative of a request to initiate identity emitting light by the lighting device 40a, 40b, is sent from the camera device to the vehicle 1, e.g. via a Wireless Local Area Network, so that the camera can capture at least any of an image and a video of the vehicle 1 when the identity emitting light by the lighting device 40a, 40b is initiated to verify that the vehicle 1 in the captured image and/or video is genuinely the vehicle 1 with the lighting device 40a, 40b.

The second aspect of this disclosure shows a method for identifying and verifying that a vehicle 1 is genuine.

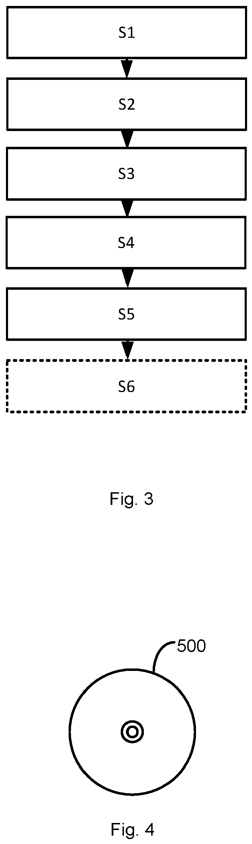

Figure 3 illustrates a flow chart of the method steps according to the second aspect of the disclosure.

The method comprising the step of S3 initiating identity emitting light by a lighting device 40a,40b of the vehicle 1, the step of S4 capturing at least any of an image and a video of the vehicle 1 by an electronic device 10, and the step of S5 processing the captured image and/or video to identify the identity emitting light to verify that the vehicle in the captured image and/or video is genuinely the vehicle 1 with the lighting device 40a,40b.

An advantage with this second aspect is that the captured image must contain the identity emitting light which, and this information is used to verify that the vehicle in the image is genuinely the vehicle with the lighting device.

According to some embodiments the identity emitting light is emitted according to a predefined blinking sequence.

An advantage with this embodiment is that the predefined blinking sequence is unique and the predefined blinking sequence then has to be present in the captured image and/or video to verify that the vehicle 1 is genuinely the vehicle 1 with the lighting device 40a,40b emitting the identity emitting light according to the predefined blinking sequence.

According to some embodiments the identity emitting light is emitted according to a predefined light intensity sequence.

An advantage with this embodiment is that the predefined light intensity sequence is unique and the predefined light intensity sequence then has to be present in the captured image and/or video to verify that the vehicle is genuinely the vehicle with the lighting device emitting the identity emitting light according to the predefined light intensity sequence.

According to some embodiments the identity emitting light is emitted by at least a first predefined lighting device 40a,40b arranged at the vehicle 1.

An advantage with this embodiment is that the at least first predefined lighting device 40a, 40b is uniquely arranged at the vehicle 1, and then the at least first predefined lighting device 40a, 40b has to be present in the captured image and/or video to verify that the vehicle 1 is genuinely the vehicle 1 with the lighting device 40a, 40b emitting the identity emitting light according to the the at least first predefined lighting device 40a, 40b.

According to some embodiments, the identity emitting light is emitted by at least a first predefined lighting device 40a and at least a second predefined lighting device 40b arranged at the vehicle 1.

In an example the right front fog light is lit and at the same time the right front side blinker is constantly lit while all other lights of the vehicle are unlit, as illustrated in Figure 2a.

According to some embodiments the processing of the captured image and/or video to identify the identity emitting light the comprises comparing the obtained identity emitting light with a predefined identity emitting light, and in a determination that the obtained identity emitting light corresponds to the predefined identity emitting light, determining that the vehicle 1 in the captured image and/or video is genuinely the vehicle 1 with the lighting device 40a,40b.

An advantage with this embodiment is that when the captured image contains the identity emitting light, which is predefined and therefore known to the system, the identity emitting light can be detected in the captured image and/or video, and used to verify that the vehicle in the image is genuinely the vehicle with the lighting device.

According to some embodiments the method comprises the step of S6 storing the captured image and/or video together with the determination that the vehicle in the captured image and/or video is genuinely the vehicle 1 with the lighting device 40a,40b.

An advantage with this embodiment is that this information can be retrieved at a later point in time to proof the presence of the vehicle in the in captured image and/or video.

According to some embodiments the method comprises the step of S1 receiving a request indicative of initiation or termination of usage of the vehicle 1.

An advantage with this embodiment is that the system can determine when it is time to capture at least any of an image and a video of the vehicle by the electronic device.

According to some embodiments the method comprises the step of S2 generating an instruction message to the electronic device 10 indicative of a request to capture at least any of an image and a video of the vehicle 1 by the camera of the electronic device 10.

An advantage with this embodiment is that the system 100 can prompt the electronic device 10 to automatically take a picture of the vehicle 1, or to prompt a user to take a picture of the vehicle 1 by the electronic device 10, a certain point in time.

The third aspect of this disclosure shows a computer program product comprising a non-transitory computer readable medium, having thereon a computer program comprising program instructions, the computer program being loadable into a processing circuitry 102a,102b,102c and configured to cause execution of the method according to the second aspect when the computer program is run by the processing circuitry 102a,102b,102c.

The person skilled in the art realizes that the present disclosure is not limited to the preferred embodiments described above. The person skilled in the art further realizes that modifications and variations are possible within the scope of the appended claims. Additionally, variations to the disclosed embodiments can be understood and effected by the skilled person in practicing the claimed disclosure, from a study of the drawings, the disclosure, and the appended claims.

## Claims

1. A system (100) for identifying and verifying that a vehicle (1) is genuine, the system (100) comprises:
a lighting device (40a,40b) arranged at the vehicle (1) configured emit light;
an electronic device (10) with a camera configured to capture at least any of an image and a video of the vehicle (1);
a processing circuitry (102a,102b,102c) operatively connected to the lighting device (40a,40b) and the electronic device (10) configured to:
- initiate identity emitting light by the lighting device (40a,40b);
- capture at least any of an image and a video of the vehicle (1) by the electronic device (10); and
- process the captured image and/or video to identify the identity emitting light to verify that the vehicle in the captured image and/or video is genuinely the vehicle (1) with the lighting device (40a,40b).

2. The system (100) according to claim 1, wherein the identity emitting light is at least any of a visible light and an infrared light.

3. The system (100) according to any of the preceding claims, wherein the processing of the captured image and/or video to identify the identity emitting light comprising comparing the obtained identity emitting light with a predefined identity emitting light, and in a determination that the obtained identity emitting light corresponds to the predefined identity emitting light, determining that the vehicle in the captured image and/or video is genuinely the vehicle (1) with the lighting device (40a,40b).

4. The system (100) according to any of the preceding claims, wherein the processing circuitry (102a,102b,102c) is further configured to:
- store the captured image and/or video together with the determination that the vehicle in the captured image and/or video is genuinely the vehicle (1) with the lighting device (40a,40b).

5. The system (100) according to any of the preceding claims, wherein the processing circuitry (102a,102b,102c) is further configured to:
- receive a request indicative of initiation or termination of usage of the vehicle (1).

6. The system (100) according to any of the preceding claims, wherein the processing circuitry (102a,102b,102c) is further configured to:
- generate an instruction message to the electronic device (10) indicative of a request to capture at least any of an image and a video of the vehicle (1) by the camera of the electronic device (10).

7. A method for identifying and verifying that a vehicle (1) is genuine, the method comprising:
- (S3) initiating identity emitting light by a lighting device (40a,40b) of the vehicle (1);
- (S4) capturing at least any of an image and a video of the vehicle (1) by an electronic device (10); and
- (S5) process the captured image and/or video to identify the identity emitting light to verify that the vehicle in the captured image and/or video is genuinely the vehicle (1) with the lighting device (40a,40b).

8. The method according to claim 7, wherein the identity emitting light is emitted according to a predefined blinking sequence.

9. The method according to any of the claims 7-8, wherein the identity emitting light is emitted according to a predefined light intensity sequence.

10. The method according to according to any of the claims 7-9, wherein the identity emitting light is emitted by at least a first predefined lighting device (40a,40b) arranged at the vehicle (1).

11. The method according to according to any of the claims 7-10 wherein the processing of the captured image and/or video to identify the identity emitting light comprising comparing the obtained identity emitting light with a predefined identity emitting light, and in a determination that the obtained identity emitting light corresponds to the predefined identity emitting light, determining that the vehicle in the captured image and/or video is genuinely the vehicle (1) with the lighting device (40a,40b).

12. The method according to according to any of the claims 7-11 comprising:
- (S6) storing the captured image and/or video together with the determination that the vehicle in the captured image and/or video is genuinely the vehicle (1) with the lighting device (40a,40b).

13. The method according to any of the claims 7-12 further comprising:
- (S1) receiving a request indicative of initiation or termination of usage of the vehicle (1).

14. The method according to any of the claims 7-13 further comprising:
- (S2) generating an instruction message to the electronic device (10) indicative of a request to capture at least any of an image and a video of the vehicle (1) by the camera of the electronic device (10).

15. A computer program product (500) comprising a non-transitory computer readable medium, having thereon a computer program comprising program instructions, the computer program being loadable into a processing circuitry (102a,102b,102c) and configured to cause execution of the method according to any of claims 7 through 14 when the computer program is run by the processing circuitry (102a,102b,102c).
